# EUROPÄISCHE PATENTANMELDUNG

(11) **EP 1 520 648 A2**
(43) Veröffentlichungstag der Anmeldung: **06.04.2005**
(21) Anmeldenummer: 04022894.2
(22) Anmeldetag: 25.09.2004
(51) Int. Cl.: B23B 31/30

(54) **Spannzylinder**

(30) Priorität: 04.10.2003 DE 10346159
(71) Anmelder: Röhm GmbH, 89567 Sontheim (DE)
(72) Erfinder: Wechler, Helmut, 89429 Bachhagel (DE)
(74) Vertreter: Hentrich, Swen Dipl.-Phys. Dr.

(57) **Zusammenfassung**

Die Erfindung betrifft einen Spannzylinder für Spanneinrichtungen an Werkzeugmaschinen (2), mit einem mit der rotierend antreibbaren Arbeitsspindel (4) der Werkzeugmaschine (2) koppelbaren Zylindergehäuse (3) und einem in der Zylinderkammer (5) des Zylindergehäuses (3) axial verstellbaren Zylinderkolben (6), sowie mit einem Verteiler (9), der eine umlaufende, die Druckmittelleitungen (8) aufweisende Verteilerhohlwelle (10) und ein feststehendes, die Druckmittelanschlüsse (12) aufweisendes, auf der Verteilerhohlwelle (10) gelagertes Verteilergehäuse (11) umfaßt. Von einer Mediumzuführung (17) bestehend aus einem Statorgehäuse (16) und einer Rotorwelle (15) ist die als Adapterscheibe (14) ausgebildete Rotorwelle (15) lösbar an dem freien Ende der Verteilerhohlwelle (10) und das Statorgehäuse (16) lösbar an dem Verteilergehäuse (11) anschließbar, wobei zwischen der Adapterscheibe (14) und dem Statorgehäuse (16) ein Gleitringscheibenpaar (18) angeordnet ist.

## Beschreibung

Die Erfindung betrifft einen Spannzylinder für Spanneinrichtungen an Werkzeugmaschinen, mit einem mit der rotierend antreibbaren Arbeitsspindel der Werkzeugmaschine koppelbaren Zylindergehäuse und einem in der Zylinderkammer des Zylindergehäuses axial verstellbaren Zylinderkolben, sowie mit einem Verteiler, der eine umlaufende, die Druckmittelleitungen aufweisende Verteilerhohlwelle und ein feststehendes, die Druckmittelanschlüsse aufweisendes, auf der Verteilerhohlwelle gelagertes Verteilergehäuse umfaßt.

Bei derartigen aus der Praxis bekannten Spannzylindern ergibt sich bei bestimmten Einsatzgebieten die Notwendigkeit, eine zusätzliche Mediumzuführung anzubauen, um an der Werkzeugmaschine eine Spanneinrichtung betreiben zu können, die gegenüber der zuvor verwendeten Spanneinrichtung zusätzliche Funktionen erfüllen soll, die ein zusätzliches Medium erfordern, wie beispielsweise Blasluft, Kühlmittel, Zentralschmierung oder Hydrauliköl. Bei derartigen Anwendungsfällen erfolgt im Stand der Technik eine Ankopplung der externen, autarken Mediumzuführung an die Verteilerhohlwelle, die dadurch zusätzlich belastet wird und aufgrund des Schnittstellen-Passungsspiels zwischen der Verteilerhohlwelle und der Mediumzuführung bei hohen Drehzahlen zusätzlichen Schwingungen unterliegt, die an die Maschinenspindel weitergegeben werden und damit negativ die spanend zu erzeugende Werkstückkontur beeinflussen.

Der Erfindung liegt daher die Aufgabe zugrunde, einen Spannzylinder der eingangs genannten Art so auszubilden, daß die negative Beeinflussung der spanend zu erzeugenden Werkstückkontur bei dem erforderlichen Einsatz einer zusätzlichen Mediumzuführung reduziert ist.

Diese Aufgabe wird nach der Erfindung dadurch gelöst, daß von einer Mediumzuführung, bestehend aus einem Statorgehäuse und einer Rotorwelle die in der Adapterscheibe ausgebildete Rotorwelle lösbar an dem freien Ende der Verteilerhohlwelle und das Statorgehäuse lösbar an dem Verteilergehäuse anschließbar ist, und daß zwischen der Adapterscheibe und dem Statorgehäuse ein Gleitringscheibenpaar angeordnet ist.

Mit dieser Gestaltung ist der Vorteil verbunden, daß das Statorgehäuse unmittelbar an dem Verteilergehäuse angeschlossen ist und die zwischen dem Verteilergehäuse und der Verteilerhohlwelle ausgebildet und stets vorhandene Lagerung ausgenutzt werden kann, um die durch das Statorgehäuse gebildete Last aufzunehmen und insoweit die Verteilerhohlwelle zu entlasten. An die Verteilerhohlwelle ist daher nur noch die Rotorwelle anzuschließen, was bereits zu einer deutlichen Reduzierung unerwünschter Schwingungserscheinungen führt.

Im Rahmen der Erfindung ist es bevorzugt, wenn am Statorgehäuse eine parallel zur Zylinderachse orientierte Zentrierfläche ausgebildet ist zur Zusammenwirkung mit einer am Verteilergehäuse ausgebildeten Kontaktfläche. Die Präsenz einer Zentrierfläche erleichtert die lagerichtige Montage des Statorgehäuses am Verteilergehäuse.

Es ist bevorzugt, daß die Zentrierfläche und die Kontaktfläche in Umfangsrichtung verlaufen und in Umfangsrichtung geschlossen sind. Dabei besteht die Möglichkeit, daß die Kontaktfläche am Außenumfang des Verteilergehäuses ausgebildet ist, so daß insbesondere eine einfache Nachrüstmöglichkeit bei bestehenden Spannzylindern gegeben ist. Alternativ ist es auch möglich, daß die Kontaktfläche am Innenumfang einer axialen Öffnung des Verteilergehäuses ausgebildet ist.

Um die Montage zu vereinfachen, ist am Statorgehäuse ein Anschlag zur Bestimmung von dessen axialer Lage gegenüber dem Verteilergehäuse ausgebildet.

Bevorzugt ist es weiterhin, wenn das Gleitringscheibenpaar durch zwei Hülsen gebildet ist mit koaxial zur Zylinderachse liegenden Hülsenachsen, und wenn die Gleitflächen an den einander zugewandten Stirnflächen der Hülsen angeordnet sind. Um einen einfachen, verlustfreien Mediumtransfer zu erreichen ist dabei vorgesehen, daß an der dem Statorgehäuse zugeordneten Hülse ein Ringbund ausgebildet ist als Anlage für eine an dem Statorgehäuse abgestützte Druckfeder, die dem Zusammenhalten der beiden Hülsen dient.

Um eine erhöhte Flexibilität bei Einsatz der zusätzlichen Mediumzuführung zu erreichen und die vorhandene Spanneinrichtung möglichst vielseitig einsetzen zu können, ist es im Rahmen der Erfindung bevorzugt, wenn der am Statorgehäuse ausgebildete Mediumanschluß mehrfach vorgesehen ist.

Im folgenden wird die Erfindung an in der Zeichnung dargestellten Ausführungsbeispielen näher erläutert; es zeigen:
- Fig. 1: in einem Längsschnitt einen an einer Arbeitsspindel einer Werkzeugmaschine angeschlossenen Spannzylinder mit einer einen zusätzlichen Mediumanschluß bereitstellenden, lösbar befestigten Mediumzuführung und
- Fig. 2: in einer der Figur 1 entsprechenden Darstellungsweise eine Ausführungsform mit einer zwei Mediumanschlüsse aufweisenden Mediumzuführung.

In der Zeichnung ist ein Spannzylinder 1 dargestellt, der dazu dient, in der Zeichnung selbst nicht abgebildete Spanneinrichtungen an Werkzeugmaschinen 2 zu betätigen, wozu der Spannzylinder 1 ein Zylindergehäuse 3 aufweist, das mit der rotierend antreibbaren Arbeitsspindel 4 der Werkzeugmaschine 2 koppelbar ist. In dem Zylindergehäuse 3 ist in der Zylinderkammer 5 ein axial verstellbarer Zylinderkolben 6 angeordnet, der in der Zylinderkammer 5 verstellt werden kann durch die Beaufschlagung der Druckkammern 7 mittels eines durch Druckmittelleitungen 8 zugeführten Mediums. Für die Mediumzuführung wird ein Verteiler 9 genutzt, der eine umlaufende, die Druckmittelleitungen 8 aufweisende Verteilerhohlwelle 10 besitzt, die mit dem Zylinderkolben 6 verbunden oder einstückig ausgebildet ist. Auf der Verteilerhohlwelle 10 ist ein feststehendes, also nicht umlaufendes Verteilergehäuse 11 gelagert, das die Druckmittelanschlüsse 12 trägt. In der Zeichnung sind die zwischen der Verteilerhohlwelle 10 und dem Verteilergehäuse 11 angeordneten Lager mit 13 bezeichnet. Sofern die von dem Verteilergehäuse 11 bereitgestellten Druckmittelanschlüsse 12 für den gewünschten Einsatzzweck des Spannzylinders 1 nicht ausreichen, besteht die Möglichkeit, lösbar an der Verteilerhohlwelle 10 eine in der Adapterscheibe 14 ausgebildete Rotorwelle 15 lösbar zu befestigen und am freien Ende des Verteilergehäuses 11 lösbar ein Statorgehäuse 16 anzuschließen, die zusammen eine Mediumzuführung 17 bilden. Zwischen der Adapterscheibe 14 und dem Statorgehäuse 16 ist ein Gleitringscheibenpaar 18 angeordnet, das durch zwei Hülsen 19 mit koaxial zur Zylinderachse liegenden Hülsenachsen gebildet ist, wobei die Gleitflächen an den zueinander zugewandten Stirnflächen der Hülsen 19 angeordnet sind. Die dem Statorgehäuse 16 zugeordnete Hülse 19 weist einen Ringbund 22 auf als Anlage für eine an dem Statorgehäuse 16 abgestützte Druckfeder 23, die dem Zusammenpressen der Hülsen 19 dient.

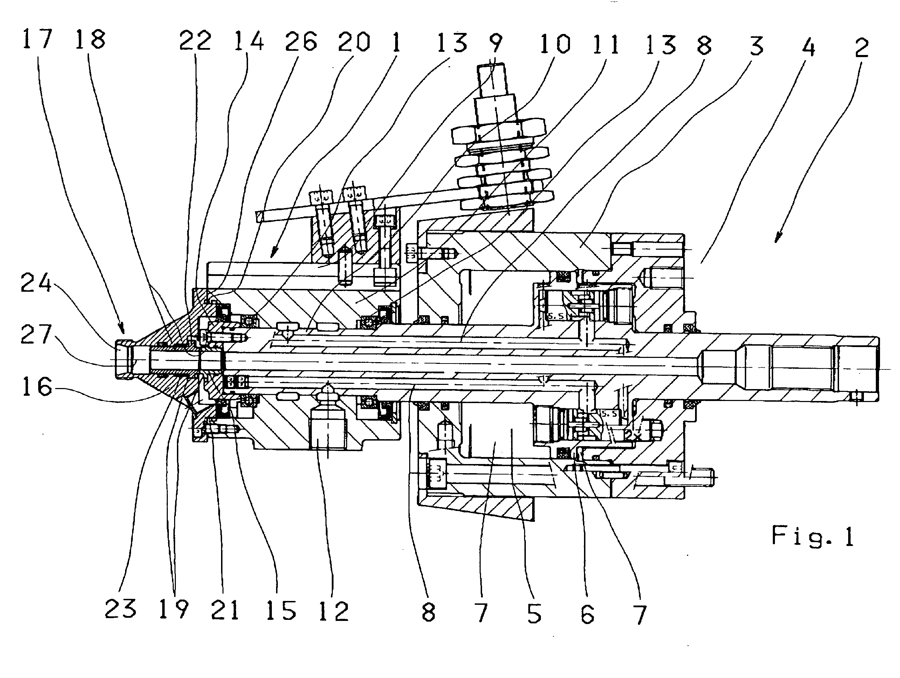

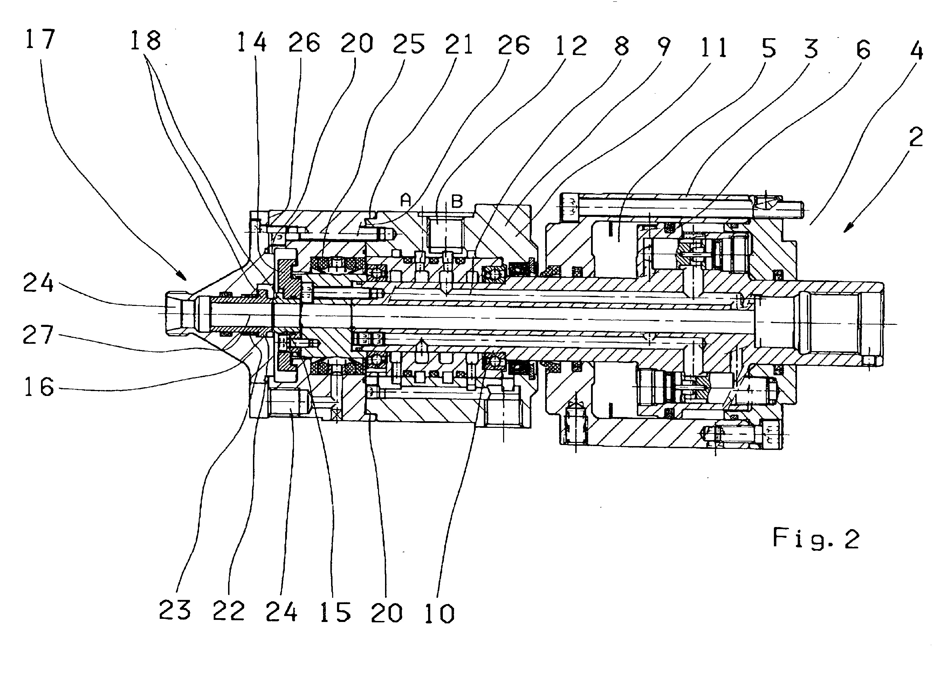

Am Statorgehäuse 16 ist eine parallel zur Zylinderachse 27 orientierte Zentrierfläche 20 ausgebildet zur Zusammenwirkung mit einer im Verteilergehäuse 11 ausgebildeten Kontaktfläche 21, wobei die Zentrierfläche 20 und die Kontaktfläche 21 in Umfangsrichtung verlaufend sind. Bei dem in der Figur 1 dargestellten Ausführungsbeispiel ist die Kontaktfläche 21 am Innenumfang einer axialen Öffnung des Verteilergehäuses 11 ausgebildet, während Figur 2 die Möglickeit zeigt, die Kontaktfläche 21 am Außenumfang des Verteilergehäuses 11 anzuordnen. Das Stätorgehäuse 16 weist weiterhin einen Anschlag 26 zur Bestimmung von dessen axialer Lage gegenüber dem Verteilergehäuse 11 auf.

Figur 1 zeigt eine Ausführungsform, bei der die Mediumzuführung 17 einen zusätzlichen Mediumanschluß 24 am Statorgehäuse 16 aufweist, während Figur 2 die Möglichkeit zeigt, daß auch mehrere Mediumanschlüsse 24 am Statorgehäuse 16 ausgebildet sein können, wozu dann gegebenenfalls lediglich die axiale Erstreckung des Statorgehäuses 16 zu erhöhen ist und gegebenenfalls ein Zwischenstück auf die Verteilerhohlwelle 10 aufzusetzen ist, wodurch auch die Möglichkeit besteht, zwischen dem Statorgehäuse 16 und der verlängerten Verteilerhohlwelle 10 unmittelbar eine Dichtung 25 bereitzustellen.

### Bezugszeichenliste

- 1: Spannzylinder
- 2: Werkzeugmaschine
- 3: Zylindergehäuse
- 4: Arbeitsspindel
- 5: Zylinderkammer
- 6: Zylinderkolben
- 7: Druckkammern
- 8: Druckmittelleitungen
- 9: Verteiler
- 10: Verteilerhohlwelle
- 11: Verteilergehäuse
- 12: Druckmittelanschlüsse
- 13: Lager
- 14: Adapterscheibe
- 15: Rotorwelle
- 16: Statorgehäuse
- 17: Mediumzuführung
- 18: Gleitringscheibenpaar
- 19: Hülsen
- 20: Zentrierfläche
- 21: Kontaktfläche
- 22: Ringbund
- 23: Druckfeder
- 24: Mediumanschluß
- 25: Dichtung
- 26: Anschlag
- 27: Zylinderachse

## Patentansprüche

1. Spannzylinder für Spanneinrichtungen an Werkzeugmaschinen (2), mit einem mit der rotierend antreibbaren Arbeitsspindel (4) der Werkzeugmaschine (2) koppelbaren Zylindergehäuse (3) und einem in der Zylinderkammer (5) des Zylindergehäuses (3) axial verstellbaren Zylinderkolben (6), sowie mit einem Verteiler (9), der eine umlaufende, die Druckmittelleitungen (8) aufweisende Verteilerhohlwelle (10) und ein feststehendes, die Druckmittelanschlüsse (12) aufweisendes, auf der Verteilerhohlwelle (10) gelagertes Verteilergehäuse (11) umfaßt, **dadurch gekennzeichnet, daß** von einer Mediumzuführung (17) bestehend aus einem Statorgehäuse (16) und einer Rotorwelle (15) die in der Adapterscheibe (14) ausgebildete Rotorwelle (15) lösbar an dem freien Ende der Verteilerhohlwelle (10) und das Statorgehäuse (16) lösbar an dem Verteilergehäuse (11) anschließbar ist, und daß zwischen der Adapterscheibe (14) und dem Statorgehäuse (16) ein Gleitringscheibenpaar (18) angeordnet ist.

2. Spannzylinder nach Anspruch 1, **dadurch gekennzeichnet, daß** am Statorgehäuse (16) eine parallel zur Zylinderachse (27) orientierte Zentrierfläche (20) ausgebildet ist zur Zusammenwirkung mit einer am Verteilergehäuse (11) ausgebildeten Kontaktfläche (21).

3. Spannzylinder nach Anspruch 2, **dadurch gekennzeichnet, daß** die Zentrierfläche (20) und die Kontaktfläche (21) in Umfangsrichtung verlaufen und in Umfangsrichtung geschlossen sind.

4. Spannzylinder nach Anspruch 3, **dadurch gekennzeichnet, daß** die Kontaktfläche (21) am Außenumfang des Verteilergehäuses (11) ausgebildet ist.

5. Spannzylinder nach Anspruch 3, **dadurch gekennzeichnet, daß** die Kontaktfläche (21) am Innenumfang einer axialen Öffnung des Verteilergehäuses (11) ausgebildet ist.

6. Spannzylinder nach einem der Ansprüche 1 bis 5, **dadurch gekennzeichnet, daß** das Gleitringscheibenpaar (18) durch zwei Hülsen (19) gebildet ist mit koaxial zur Zylinderachse liegenden Hülsenachsen, und daß die Gleitflächen an den einander zugewandten Stirnflächen der Hülsen (19) angeordnet sind.

7. Spannzylinder nach Anspruch 6, **dadurch gekennzeichnet, daß** an der dem Statorgehäuse (16) zugeordneten Hülse (19) ein Ringbund (22) ausgebildet ist als Anlage für eine an dem Statorgehäuse (16) abgestützte Druckfeder (23), die dem Zusammenhalten der beiden Hülsen (19) dient.

8. Spannzylinder nach einem der Ansprüche 1 bis 7, **dadurch gekennzeichnet, daß** der am Statorgehäuse (16) ausgebildete Mediumanschluß (24) mehrfach vorgesehen ist.
